# FASCICULE DE BREVET EUROPEEN

(11) **EP 2 444 748 B1**
(45) Date de publication et mention de la délivrance du brevet: **17.12.2014**
(21) Numéro de dépôt: 11185856.9
(22) Date de dépôt: 19.10.2011
(51) Int. Cl.: F24D 11/02, F24D 17/02

(54) **Installation de production d'eau chaude sanitaire pour habitation collective comprenant un ventilateur d'extraction d'air commun**
Anlage zur Erzeugung von sanitärem Warmwasser für Mehrfamilienhaus, die einen gemeinsamen Entlüftungsventilator umfasst
Facility for producing domestic hot water for an apartment block including a common air-extractor fan

(30) Priorité: 25.10.2010 FR 1058754
(43) Date de publication de la demande: 25.04.2012
(73) Titulaire: Atlantic Climatisation et Ventilation, 69330 Meyzieu (FR)
(72) Inventeur: Merlet, Christian, 85140 Chauche (FR); Demia, Laurent, 01120 Montluel (FR)
(74) Mandataire: Hirsch & Associés

(56) Documents cités:
- DE-A1- 3 022 931
- DE-A1- 19 614 913
- FR-A1- 2 926 626
- JP-A- 60 071 829
- JP-A- 61 168 744

## Description

La présente invention concerne une installation de production d'eau chaude sanitaire pour habitation collective comprenant un ventilateur d'extraction d'air commun.

Une installation de production d'eau chaude sanitaire pour habitation collective comprenant un ventilateur d'extraction d'air commun est décrite dans la demande FR-A-2 926 626.

Cette installation de production d'eau chaude sanitaire pour une habitation collective comprenant une pluralité de logements individuels, comporte tout d'abord un réseau d'extraction d'air individuel associé à chacun des logements individuels, dans lequel l'air extrait est amené dans un dispositif de pompe à chaleur pour chauffer de l'eau à chauffer contenue dans un réservoir de stockage disposé dans le logement individuel. L'installation comporte également un réseau d'extraction d'air commun aux différents logements individuels, dans lequel débouchent les réseaux d'extraction d'air individuels, en aval des chauffe-eau, le réseau d'extraction d'air commun étant muni d'un ventilateur d'extraction d'air commun.

Ainsi, selon ce document FR-A-2 926 626, le débit d'air extrait dans chaque logement est assuré par le seul ventilateur commun. Ce type d'installation présente l'intérêt d'avoir le minimum d'équipement dans les logements et d'assurer qu'un logement individuel ne peut pas être pollué par l'air extrait d'un autre logement individuel.

Cependant, le document FR-A-2 926 626 ne décrit pas comment le ventilateur d'air commun est régulé.

Le but de la présente invention est de fournir une installation de production d'eau chaude sanitaire pour une habitation collective, comportant un ventilateur d'air commun régulé de manière à limiter la consommation énergétique de l'installation tout en permettant un débit d'air extrait satisfaisant dans les différents logements de l'habitation collective et ne présentant pas les inconvénients des installations de l'art antérieur.

A cette fin, la présente invention propose une installation de production d'eau chaude sanitaire pour une habitation collective comprenant une pluralité de logements individuels, l'installation comportant :
- un réseau d'extraction d'air individuel associé à chacun des logements individuels, chaque réseau d'extraction d'air individuel étant muni de moyens d'échange de chaleur entre l'air extrait et de l'eau à chauffer contenue dans un réservoir de stockage disposé dans le logement individuel,
- un réseau d'extraction d'air commun aux différents logements individuels, dans lequel débouchent les réseaux d'extraction d'air individuels, en aval des moyens d'échange de chaleur, le réseau d'extraction d'air commun étant muni d'un ventilateur d'extraction d'air commun, et
- au moins un capteur de pression adapté à mesurer la pression dans le réseau d'extraction, formé des réseaux d'extraction d'air individuels et du réseau d'extraction commun, le ventilateur étant régulé en fonction de la pression mesurée par le capteur de pression.

Suivant des modes de réalisation préférés, l'invention comprend une ou plusieurs des caractéristiques suivantes :
- les moyens d'échange de chaleur comprennent un circuit de fluide frigorigène entre un évaporateur, où l'air parcourant la conduite d'extraction échange de la chaleur avec le fluide frigorigène, et un condenseur où le fluide frigorigène échange de la chaleur avec le fluide à chauffer ;
- les moyens d'échange de chaleur comprennent également un compresseur en aval de l'évaporateur et en amont du condenseur et un détendeur en aval du condenseur et en amont de l'évaporateur ;
- le condenseur est dans le réservoir de stockage ou en contact avec la paroi externe du réservoir de stockage;
- le capteur de pression est adapté à mesurer la pression dans le réseau d'extraction d'air commun, au niveau du débouché du réseau d'extraction d'air individuel correspondant à la plus grande perte de charge par rapport au ventilateur d'extraction d'air commun ;
- le capteur de pression est adapté à mesurer la pression dans un réseau d'extraction d'air individuel ;
- le capteur de pression est adapté à mesurer la pression dans le réseau d'extraction d'air individuel dont le débouché dans le réseau d'extraction d'air commun correspond à la plus grande perte de charge par rapport au ventilateur d'extraction d'air commun ;
- le réseau d'extraction d'air dont la pression est mesurée par le capteur de pression, est muni d'un filtre pour empêcher l'encrassement de l'évaporateur, le capteur de pression étant adapté à mesurer la pression en amont du filtre, le réseau d'extraction d'air dont la pression est mesurée par le capteur de pression comportant également, de préférence, au moins une bouche d'aspiration de l'air depuis le logement individuel associé, le capteur de pression étant adapté à mesurer la pression en aval de la bouche d'aspiration ;
- le capteur est adapté à mesurer la pression au niveau d'une bouche d'extraction du réseau d'extraction d'air individuel, la bouche d'extraction au niveau de laquelle la pression est mesurée correspondant de préférence à la plus grande perte de charge par rapport au ventilateur d'extraction d'air commun ; et
- le capteur de pression est un capteur binaire, notamment un pressostat.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente schématiquement une installation de production d'eau chaude sanitaire pour une habitation collective selon un premier mode de réalisation.
La figure 2 représente un détail de la figure 1.
La figure 3 représente schématiquement une installation de production d'eau chaude sanitaire pour une habitation collective selon un deuxième mode de réalisation.
La figure 4 représente un détail de la figure 3.
La figure 5 représente schématiquement une installation de production d'eau chaude sanitaire pour une habitation collective selon un troisième mode de réalisation.
La figure 6 représente schématiquement un détail de la figure 5.

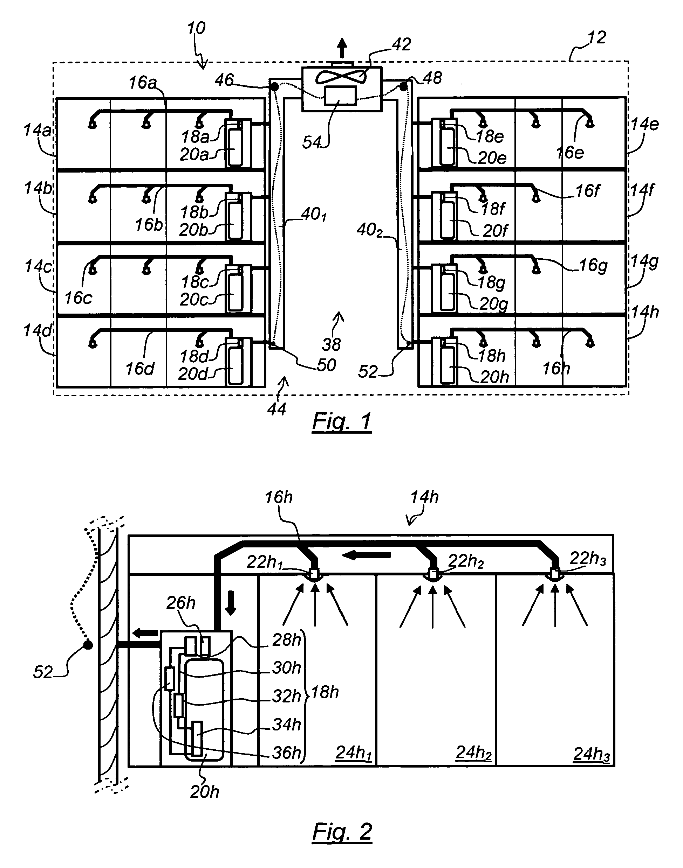

Telle qu'illustrée à la figure 1, l'installation 10 de production d'eau chaude sanitaire pour une habitation collective 12 comprenant une pluralité de logements individuels 14a-14h comporte tout d'abord des réseaux d'extraction d'air individuels 16a-16h associés, chacun, à l'un des logements individuels 14a-14h. Sur chaque réseau d'extraction d'air individuel 16a-16h sont ménagés des moyens d'échange de chaleur 18a-18h entre l'air extrait des logements individuels 14a-14h et de l'eau à chauffer contenue dans un réservoir de stockage 20a-20h disposé dans le logement individuel 14a-14h associé au réseau d'extraction d'air individuel 16a-16h considéré.

Un réseau d'extraction d'air individuel 16h, associé à un logement 14h, est représenté à la figure 2. Le réseau d'extraction d'air individuel 16h débouche à travers une pluralité de bouches d'extraction d'air 22h₁, 22h₂, 22h₃ dans différentes pièces 24h₁, 24h₂, 24h₃ du logement 14h, généralement dans les sanitaires, la cuisine et la salle de bains. Les bouches d'extraction d'air 22h₁, 22h₂, 22h₃ sont par exemple du type à débit régulé en fonction de la pression au niveau de la bouche. Ce type de bouche assure l'extraction d'un débit d'air sensiblement constant tant que la dépression au niveau de la bouche reste dans une plage de valeurs fixée.

L'air extrait des différentes pièces 24h₁, 24h₂, 24h₃ est amenée par le réseau d'extraction d'air individuel 16h à traverser un filtre 26h puis dans un évaporateur 28h des moyens d'échange de chaleur 18h. Le filtre 26h assure une protection de l'évaporateur 28h contre un encrassement prématuré.

Les moyens d'échange de chaleur 18h fonctionnent selon le principe de la pompe à chaleur. Dans l'évaporateur 28h, l'air extrait perd des calories en faveur d'un fluide frigorigène circulant dans un circuit de fluide frigorigène 30h Après avoir traversé l'évaporateur 28h, le fluide frigorigène est amené au niveau d'un compresseur 32h qui permet à la fois la mise en circulation du fluide frigorigène et la compression de ce fluide frigorigène. Cette compression du fluide frigorigène permet d'augmenter la température du fluide frigorigène. Le fluide frigorigène circule alors jusqu'à un condenseur 34h permettant l'échange de calories entre le fluide frigorigène et l'eau contenue dans le réservoir de stockage 20h afin de chauffer cette dernière. Pour permettre l'échange de calories, le condenseur 34h peut être plongé dans le réservoir de stockage, ce qui maximise la surface d'échange entre le condenseur et l'eau à chauffer. En variante, le condenseur 34h peut entourer le réservoir de stockage, en étant en contact avec une paroi externe du réservoir de stockage 20h.

Le fluide frigorigène circule ensuite jusqu'à un détendeur 36h avant de traverser à nouveau l'évaporateur et, ainsi, commencer un nouveau cycle.

L'air extrait des différentes pièces 24h₁, 24h₂, 24h₃, après avoir traversé l'évaporateur 28h est guidé vers un réseau d'extraction d'air commun 38 de l'installation 10. Ce réseau d'extraction d'air commun 38 est commun aux différents logements individuels 14a-14h. Le réseau d'extraction d'air commun 38 est situé en aval des moyens d'échange de chaleur 18a-18h, dans le sens du débit d'air extrait. Le réseau d'extraction d'air commun 38 comprend en l'espèce deux branches distinctes 40₁, 40₂ en communication de fluide avec un ventilateur d'extraction d'air commun 42 adapté à créer un débit d'air extrait dans le réseau d'extraction 44 formé par les réseaux d'extraction d'air individuels 16a-16h et le réseau d'extraction d'air commun 38.

L'installation 10 comporte encore deux capteurs de pression 46, 48 dont les prises de pression respectives 50, 52 sont disposées au niveau du débouché, dans le réseau d'extraction d'air commun 38, des réseaux d'extraction d'air individuels 14d, 14h respectivement. Les capteurs de pression 46, 48 sont ainsi adaptés à mesurer, chacun, la pression en un point du réseau d'extraction d'air commun 38. De préférence, les points du réseaux d'extraction d'air où la pression est mesurée sont choisis comme étant ceux qui correspondent à la plus grande perte de charge dans chacune des deux branches 40₁, 40₂ du réseau d'extraction d'air commun 38, par rapport au ventilateur d'extraction d'air commun 42. Les capteurs de pression sont ainsi adaptés à mesurer la pression en des points du réseau d'extraction d'air commun 38 qui sont les plus défavorisés quant à la fourniture d'une pression et d'un débit d'air d'extraction par le ventilateur d'extraction d'air commun 42.

Dans toute la description, le terme « pression » est utilisé pour décrire une dépression.

Comme cela est particulièrement visible sur la figure 1, les deux capteurs de pressions 46, 48 sont reliés fonctionnellement à l'unité de commande 54 du ventilateur d'extraction d'air commun 42. Ainsi cette unité de commande 54 est-elle adaptée à réguler le ventilateur d'extraction d'air commun 42 en fonction des pressions mesurées par les capteurs de pression 46, 48.

La régulation peut consister, par exemple, à assurer le besoin en pression au niveau des prises de pression 50, 52 des capteurs de pression 46, 48. Dans ce cas, les prises de pression étant dans le réseau commun, et donc en aval des réseaux individuel, le besoin en pression peut tenir compte d'une estimation de la perte de charge du ou des réseaux individuels, cette estimation incluant notamment les pertes de charge dues au filtre, en fonction des débits qui peuvent être nécessaires dans le ou les réseaux d'extraction individuels. Pour compenser l'encrassement progressif des filtres présents dans les réseaux d'extraction d'air individuels, il peut être prévu une augmentation progressive de la consigne du ventilateur d'extraction d'air commun avec le temps.

Dans ce cas, les capteurs de pression 46, 48 peuvent être des capteurs binaires (ou logiques, par opposition à des capteurs analogiques ou numériques dont le signal de sortie peut prendre une infinité de valeurs continues ou discrètes), notamment des pressostats ou des dépressostats. Le signal de sortie de tels capteurs ne varie qu'entre deux valeurs. La première valeur (ci-après FAUX) correspond à une pression (en fait une dépression) mesurée inférieure à une valeur de seuil du capteur prédéterminée. La deuxième valeur (ci-après VRAI) correspond à une pression (en fait une dépression) mesurée supérieure à la valeur de seuil du capteur prédéterminée.

La régulation de l'installation peut alors être réalisée de la manière suivante : les signaux de sortie des deux capteurs de pression 46, 48 sont initialement à leur valeur VRAI, c'est-à-dire qu'ils mesurent une pression supérieure à la valeur de seuil prédéterminée permettant d'assurer une extraction d'air satisfaisante dans les différents logements14a-14h de l'habitation collective 12. Le ventilateur d'extraction d'air commun fournie alors une pression initiale satisfaisante.

Du fait d'une modification dans le réseau d'extraction 44 (par exemple, une demande de débit plus importante dans un autre logement moins défavorisé), le capteur de pression 46 ne mesure plus une pression supérieure à la valeur de seuil prédéterminée. L'unité de commande 54 reçoit alors la valeur FAUX de ce capteur. L'unité de commande 54 commande en conséquence une augmentation de la pression fournie par le ventilateur d'extraction d'air commun 42 à une valeur augmentée. L'augmentation de pression peut être prédéterminée. Après un intervalle de temps prédéterminé, il est vérifié si le signal de sortie du capteur 46 est repassé la valeur VRAI. Si ce n'est pas le cas, l'unité de commande 54 commande une nouvelle augmentation de pression du ventilateur d'extraction d'air commun 42, et cela jusqu'à ce que le signal de sortie du capteur de pression 46 repasse à sa valeur VRAI.

Un fois qu'il est déterminé que le signal de sortie du capteur de pression 46 est repassé à sa valeur VRAI, l'unité de commande peut commander une diminution de la pression du ventilateur d'extraction d'air commun 42. Cette commande vise à limiter la fourniture de pression du ventilateur d'extraction d'air commun à sa valeur minimale effectivement nécessaire. La diminution de pression peut par exemple être très lente et continue jusqu'au changement d'état des capteurs 46, 48. Selon un autre exemple, la diminution de pression peut correspondre à la demi différence entre la pression initiale et la pression augmentée fournies par le ventilateur d'extraction d'air commun. On peut ainsi, par dichotomies successives, assurer la régulation du ventilateur d'extraction d'air commun de telle sorte que ce ventilateur d'extraction d'air commun fournisse le juste besoin en pression à l'installation, sans surconsommation énergétique ou nuisance sonore superflue.

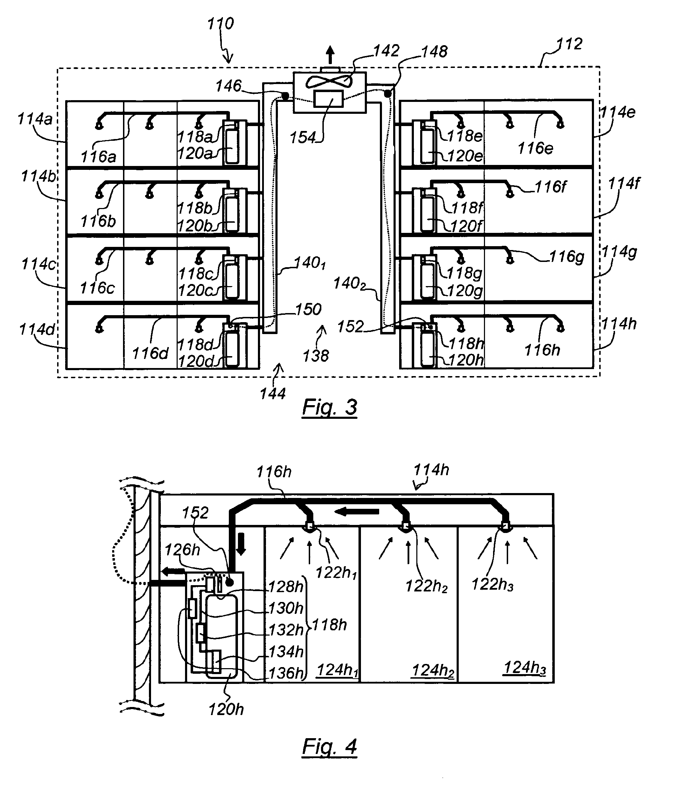

Les figures 3 et 4 illustrent un deuxième exemple 110 d'installation de production d'eau chaude sanitaire pour une habitation collective.

Dans ces figures, les éléments identiques ou de fonction identique aux éléments décrits en regard des figures 1 et 2 portent le même signe de référence augmenté de 100. Ces éléments ne seront pas décrits de manière détaillée dans la suite, ceci à fin de concision et de clarté de la description. Seuls les éléments de l'installation 110 selon le deuxième exemple, qui se distinguent des éléments de l'installation 10 selon le premier exemple, seront décrits ci-après.

Le deuxième 110 exemple d'installation de production d'eau chaude sanitaire pour une habitation collective se distingue du premier exemple 10 des figures 1 et 2 par la position des prises de pression 150, 152 des capteurs de pression 146, 148. Il est à noter que le nombre de capteurs de pression représentés sur les figures est purement illustratif et ne doit en aucun cas être compris comme ayant un caractère limitatif.

Tel que cela ressort des figures 3 et 4, les prises de pression 150, 152 des capteurs 146, 148 sont ménagées chacune dans le réseau d'extraction d'air individuel 116d, 116h d'un logement individuel 114d, 114h. Plus précisément, ces prises de pression 150, 152 sont disposées en amont du filtre 126d, 126h ménagé dans le réseau d'extraction d'air individuel 116d, 116h.

Les capteurs de pression 146, 148 sont ainsi, dans ce deuxième exemple d'installation 110 de production d'eau chaude sanitaire pour une habitation collective, adaptés à mesurer la pression dans un réseau d'extraction d'air individuel. Plus précisément, ces capteurs de pression 146, 148 sont adaptés à mesurer la pression dans le réseau d'extraction d'air individuel associé, en amont du filtre 126d, 126h. Les capteurs de pression 146, 148 sont ainsi adaptés à détecter un encrassement du filtre 126d, 126h, lequel encrassement se traduisant par une chute de la dépression en amont du filtre.

Par suite, jusqu'à une limite prédéterminée de puissance fournie par le ventilateur d'extraction d'air commun 142, l'unité de commande 154 régule le ventilateur d'extraction d'air commun 142 en adaptant la consigne de fonctionnement du ventilateur d'extraction d'air commun pour compenser l'encrassement des filtres 126d, 126h, mais aussi pour s'adapter au juste besoin en pression de l'installation 110.

La limite prédéterminée de puissance fournie par le ventilateur d'extraction d'air commun peut notamment être définie en fonction :
- de la puissance maximale que peut fournir le ventilateur d'extraction d'air commun ; ou
- d'une limite de niveau sonore du ventilateur d'extraction d'air commun.

Les prises de pression 150, 152 des capteurs de pression 146, 148 sont en outre ménagées en aval de toutes les bouches d'extraction 122d₁, 122d₂, 122h₁, 122h₂, 122h₃ des réseaux d'extraction d'air individuels 116d, 116h dans lesquels elles sont disposées.

De préférence, les réseaux d'extraction d'air individuel 116d, 116h dans lesquels les prises de pression des capteurs de pression sont ménagées, débouchent dans le réseau d'extraction d'air commun 138 en des points correspondant aux pertes de charges les plus importantes vis-à-vis du ventilateur d'extraction d'air commun 142. En d'autres termes, ces réseaux d'extraction d'air individuels sont les réseaux d'extraction d'air individuels les plus défavorisés quant à la fourniture d'une dépression par le ventilateur d'extraction d'air commun 142. Ceci est particulièrement avantageux car il est possible de réguler le ventilateur d'extraction d'air commun 142 en fonction de la pression mesurée par ces seuls capteurs. En effet, si ces capteurs indiquent une pression satisfaisante, comme ils sont positionnés aux points du réseau d'extraction d'air commun les plus défavorisés, il peut être assuré que le ventilateur d'extraction d'air commun 142 fournit une pression satisfaisante à tous les réseaux d'extraction d'air commun.

Les capteurs de pressions peuvent là encore être des capteurs de pression binaires, notamment des pressostats. Dans ce cas, la régulation fonctionne sensiblement comme cela a été décrit dans le cas de l'installation 10 des figures 1 et 2. Cependant, du fait de la position particulière des capteurs de pression dans le cas de l'installation 110 selon le deuxième exemple, la régulation va permettre de compenser l'encrassement des filtres et l'ouverture des différentes bouches des réseaux d'extraction d'air commun. La régulation du ventilateur d'extraction d'air commun met alors en dépression les deux branches 140₁, 140₂ du réseau d'extraction d'air commun, ce qui permet d'assurer l'extraction d'air nécessaire à une ventilation satisfaisante des logements individuels 114a-114h.

En outre, en période stabilisée, la consigne du ventilateur d'extraction d'air commun 142 peut être du type à pression constante ou à vitesse constante. Dans le cas d'une régulation à pression constante, la pression est mesurée alors par un capteur dont la prise de pression est positionnée au sein du ventilateur 142, au niveau du débouché des branches 140₁ et 140₂ du réseau commun. Le capteur mis en oeuvre pour ce faire peut être un capteur analogique ou numérique, dont le signal de sortie peut prendre une pluralité d'au moins trois valeurs continues ou discrètes. La période stabilisée est limitée dans le temps par une temporisation et/ou la détection d'un changement de la valeur de sortie d'un des capteurs de pression du type pressostat.

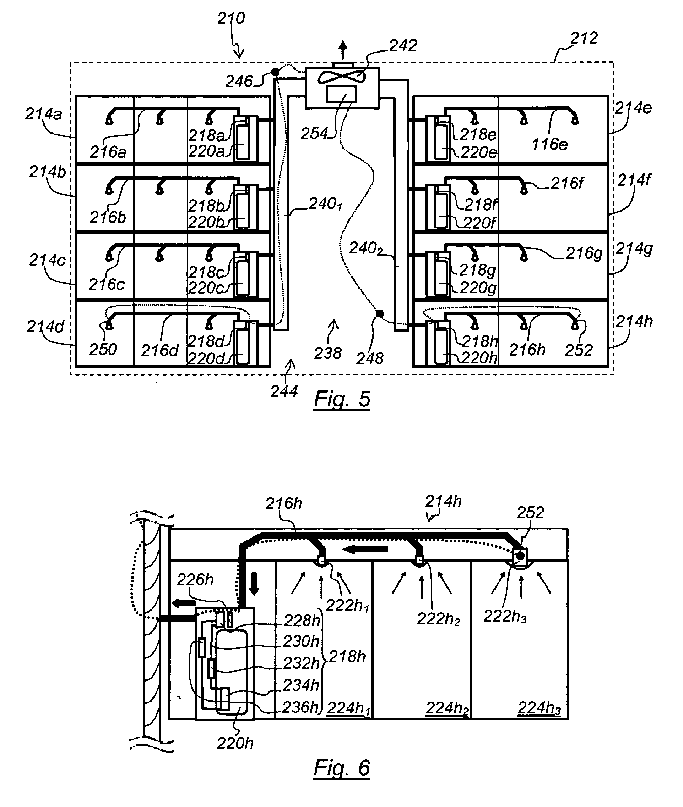

Les figures 5 et 6 illustrent un troisième exemple 210 d'installation de production d'eau chaude sanitaire pour une habitation collective.

Dans ces figures, les éléments identiques ou de fonction identique aux éléments décrits en regard des figures 1 et 2 portent le même signe de référence augmenté de 200. Ces éléments ne seront pas décrits de manière détaillée dans la suite, ceci à fin de concision et de clarté de la description. Seuls les éléments de l'installation 210 selon le troisième exemple d'installation, qui se distinguent des éléments de l'installation 10 selon le premier exemple, seront décrits ci-après.

Le troisième exemple 210 d'installation de production d'eau chaude sanitaire pour une habitation collective se distingue des premier 10 et deuxième 110 exemples des figures 1-2 et 3-4 par la position des prises de pression 250, 252 des capteurs de pression 246, 248. Il est à noter que le nombre de capteurs de pression représentés sur les figures 5 et 6 est purement illustratif et non limitatif.

Tel que cela ressort des figure 5-6, les prises de pression 250, 252 des capteurs 246, 248 sont ménagés chacune dans le réseau d'extraction d'air individuel 216d, 216h d'un logement individuel 214d, 214h. Plus précisément, ces prises de pression 250, 252 sont disposées en amont du filtre 226d, 226h ménagé dans le réseau d'extraction d'air individuel 216d, 216h. Les capteurs de pression 246, 248 sont ainsi, dans ce deuxième exemple d'installation 210 de production d'eau chaude sanitaire pour une habitation collective, adaptés à mesurer la pression dans un réseau d'extraction d'air individuel. Plus précisément, ces capteurs de pression 246, 248 sont adaptés à mesurer la pression dans le réseau d'extraction d'air individuel associé, en amont du filtre 226d, 226h, au niveau de la bouche d'extraction 222h₃ correspondant à la plus grande perte de charge par rapport au ventilateur d'extraction d'air commun. Ainsi, jusqu'à la limite de puissance que peut fournir le ventilateur d'extraction d'air commun 242, l'unité de commande 254 régule le ventilateur d'extraction d'air commun 242 en adaptant la consigne de fonctionnement du ventilateur d'extraction d'air commun pour compenser l'encrassement des filtres 226d, 226h, mais aussi pour s'adapter au juste besoin en pression de l'installation 210. La régulation permet ici d'assurer une dépression suffisante à la bouche la plus défavorisée de l'installation. Par suite, la régulation permet d'assurer une dépression suffisante au niveau de toutes les bouches d'extraction de l'installation.

Il est à noter que la bouche la plus défavorisée peut varier en fonction du temps. Dans ce cas, il est intéressant de mesurer la pression au niveau de toutes les bouches susceptibles d'être, à un instant donné, la bouche la plus défavorisée de l'installation 210. En effet, en assurant une pression satisfaisante au niveau de cette bouche la plus défavorisée de l'installation, on s'assure qu'une dépression satisfaisante règne au niveau de toutes les bouches d'extraction de tous les réseaux d'extraction d'air individuels.

Il est particulièrement intéressant d'utiliser comme capteurs 46, 48, 146, 148, 246, 248 des dépressostats, c'est-à-dire des capteurs de pression binaires ou logiques, qui se comportent comme des contacts fermés quand la dépression qu'ils mesurent est supérieure à une valeur de seuil prédéterminée, et comme des contacts ouverts quand la dépression qu'ils mesurent est inférieure à cette valeur de seuil prédéterminée.

En effet, il est alors possible de relier électriquement ces différents capteurs à l'unité de commande par un montage en série des capteurs. D'autres capteurs, comme des capteurs analogiques ou numériques dont le signal de sortie peut prendre au moins trois valeurs différentes continues ou discrètes, nécessiteraient a priori des câblages séparés des différents capteurs de pression et une analyse individuelle du signal de sortie de chaque capteur de pression.

Avec des dépressostats, qui sont des capteurs logiques, dès que la dépression mesurée par l'un des capteurs de pression devient inférieure à la valeur de seuil prédéterminée, alors le signal reçu par l'unité de commande est nul puisque le circuit formé par le câblage des capteurs de pression en série est ouvert. L'unité de commande peut alors commander une augmentation de la dépression fournie par le ventilateur d'extraction d'air commun puisque la dépression est insuffisante au niveau d'au moins une bouche d'extraction. La régulation commandée par l'unité de commande est alors similaire à la régulation décrite en regard des figures 1 et 2.

Le câblage en série des différents capteurs logiques limite également les risques de problèmes de compatibilité électromagnétique en comparaison avec des capteurs analogiques ou numériques.

Bien entendu, les dépressostats mis en oeuvre pourraient également se comporter comme un contact fermé quand la dépression qu'ils mesurent est inférieure à la valeur de seuil déterminée, et comme un contact ouvert quand la dépression qu'ils mesurent est supérieure à la valeur de seuil prédéterminée. Dans ce cas, cependant, pour pouvoir réguler de manière efficace l'installation, il conviendrait de relier les différents dépressostats à l'unité de commande en parallèle les uns des autres.

En variante, les capteurs de pression mis en oeuvre peuvent communiquer avec l'unité de commande par ondes radiofréquences ou par courant porteur.

Bien entendu, la présente invention n'est pas limitée aux exemples et au mode de réalisation décrits et représentés, mais elle est susceptible de nombreuses variantes accessibles à l'homme de l'art.

## Revendications

1. Installation (10 ; 110 ; 210) de production d'eau chaude sanitaire pour une habitation collective (12 ; 112 ; 212) comprenant une pluralité de logements individuels (14a-14h ; 114a-114h ; 214a-214h), l'installation comportant :
- un réseau d'extraction d'air individuel (16a-16h ; 116a-116h; 216a-216h) associé à chacun des logements individuels (14a-14h ; 114a-114h; 214a-214h), chaque réseau d'extraction d'air individuel étant muni de moyens (18a-18h; 118a-118h; 218a-218h) d'échange de chaleur entre l'air extrait et de l'eau à chauffer contenue dans un réservoir de stockage (20a-20h ; 120a-120h ; 220a-220h) disposé dans le logement individuel,
- un réseau d'extraction d'air (38 ; 138 ; 238) commun aux différents logements individuels, dans lequel débouchent les réseaux d'extraction d'air individuels (16a-16h ; 116a-116h ; 216a-216h), en aval des moyens d'échange de chaleur (18a-18h ; 118a-118h ; 218a-218h), le réseau d'extraction d'air commun étant muni d'un ventilateur d'extraction d'air commun (42 ; 142 ; 242), et
- au moins un capteur de pression (46, 48 ; 146, 148 ; 246, 248) adapté à mesurer la pression dans le réseau d'extraction (44 ; 144 ; 244), formé des réseaux d'extraction d'air individuels (16a-16h ; 116a-116h ; 216a-216h) et du réseau d'extraction commun (38 ; 138 ; 238), le ventilateur (42 ; 142 ; 242) étant régulé en fonction de la pression mesurée par le capteur de pression (46, 48 ; 146, 148 ; 246, 248).

2. Installation selon la revendication 1, dans laquelle les moyens d'échange de chaleur (18a-18h ; 118a-118h ; 218a-218h) comprennent un circuit de fluide frigorigène entre un évaporateur, où l'air parcourant la conduite d'extraction échange de la chaleur avec le fluide frigorigène, et un condenseur où le fluide frigorigène échange de la chaleur avec le fluide à chauffer.

3. Installation selon la revendication 2, dans laquelle les moyens d'échange de chaleur (18a-18h ; 118a-118h; 218a-218h) comprennent également un compresseur en aval de l'évaporateur et en amont du condenseur et un détendeur en aval du condenseur et en amont de l'évaporateur.

4. Installation selon la revendication 2 ou 3, dans laquelle le condenseur est dans le réservoir de stockage ou en contact avec la paroi externe du réservoir de stockage.

5. Installation selon l'une quelconque des revendications précédentes, dans laquelle le capteur de pression (46 ; 48) est adapté à mesurer la pression dans le réseau d'extraction d'air commun (38), au niveau du débouché du réseau d'extraction d'air individuel (16d ; 16h) correspondant à la plus grande perte de charge par rapport au ventilateur d'extraction d'air commun (42).

6. Installation selon l'une quelconque des revendications 1 à 4, dans laquelle le capteur de pression (146 ; 148 ; 246 ; 248) est adapté à mesurer la pression dans un réseau d'extraction d'air individuel.

7. Installation selon la revendication 6, dans laquelle le capteur de pression (146 ; 148 ; 246 ; 248) est adapté à mesurer la pression dans le réseau d'extraction d'air individuel (116d; 116h; 216d; 216h) dont le débouché dans le réseau d'extraction d'air commun (138 ; 238) correspond à la plus grande perte de charge par rapport au ventilateur d'extraction d'air commun (142 ; 242).

8. Installation selon la revendication 6 ou 7, dans laquelle le réseau d'extraction d'air dont la pression est mesurée par le capteur de pression, est muni d'un filtre (126h, 226h) pour empêcher l'encrassement de l'évaporateur, le capteur de pression (148, 248) étant adapté à mesurer la pression en amont du filtre (126h, 226h), le réseau d'extraction d'air dont la pression est mesurée par le capteur de pression comportant également, de préférence, au moins une bouche d'aspiration de l'air depuis le logement individuel associé, le capteur de pression étant adapté à mesurer la pression en aval de la bouche d'aspiration.

9. Installation selon l'une des revendications 6 à 8, dans laquelle le capteur (246 ; 248) est adapté à mesurer la pression au niveau d'une bouche d'extraction (222h₃) du réseau d'extraction d'air individuel (216d ; 216h), la bouche d'extraction (222h₃) au niveau de laquelle la pression est mesurée correspondant de préférence à la plus grande perte de charge par rapport au ventilateur d'extraction d'air commun (242).

10. Installation selon l'une quelconque des revendications précédentes, dans laquelle le capteur de pression est un capteur binaire, notamment un pressostat.

## Patentansprüche

1. Anlage (10; 110; 210) zur Erzeugung von sanitärem Warmwasser für ein Mehrfamilienhaus (12; 112; 212), das mehrere einzelne Wohnungen (14a-14h; 114a-114h; 214a-214h) umfasst, wobei die Anlage aufweist:
- einzelne Entlüftungsnetze (16a-16h; 116a-116h; 216a-216h), die jeweils einer der einzelnen Wohnungen (14a-14h; 114a-114h; 214a-214h) zugeordnet sind, wobei jedes einzelne Entlüftungsnetz mit Mitteln (18a-18h; 118a-118h; 218a-218h) zum Wärmeaustausch zwischen der Abluft und zu wärmendem Wasser, das in einem in der einzelnen Wohnung angeordneten Speicherbehälter (20a-20h; 120a-120h; 220a-220h) enthalten ist, ausgestattet ist,
- ein Entlüftungsnetz (38; 138; 238), das den verschiedenen einzelnen Wohnungen gemeinsam ist und in welches die einzelnen (16a-16h; 116a-116h; 216a-216h) stromabwärts der Wärmeaustauschmittel (18a-18h; 118a-118h; 218a-218h) münden, wobei das gemeinsame Entlüftungsnetz mit einem gemeinsamen Entlüftungsventilator (42; 142; 242) ausgestattet ist, und
- mindestens einen Drucksensor (46, 48; 146, 148; 246, 248), der dazu eingerichtet ist, den Druck in dem Entlüftungsnetz (44; 144; 244) zu messen, das von den einzelnen Entlüftungsnetzen (16a-16h; 116a-116h; 216a-216h) und dem gemeinsamen Entlüftungsnetz (38; 138; 238) gebildet wird, wobei der Ventilator (42; 142; 242) in Abhängigkeit von dem durch den Drucksensor (46, 48; 146, 148; 246, 248) gemessenen Druck geregelt wird.

2. Anlage nach Anspruch 1, wobei die Wärmeaustauschmittel (18a-18h; 118a-118h; 218a-218h) einen Kältemittelkreis zwischen einem Verdampfer, wo die durch die Abluftleitung strömende Luft mit dem Kältemittel Wärme austauscht, und einem Kondensator, wo das Kältemittel mit dem zu wärmenden Fluid Wärme austauscht, umfassen.

3. Anlage nach Anspruch 2, wobei die Wärmeaustauschmittel (18a-18h; 118a-118h; 218a-218h) außerdem einen Verdichter stromabwärts des Verdampfers und stromaufwärts des Kondensators und ein Expansionsorgan stromabwärts des Kondensators und stromaufwärts des Verdampfers umfassen.

4. Anlage nach Anspruch 2 oder 3, wobei sich der Kondensator in dem Speicherbehälter oder in Kontakt mit der Außenwand des Speicherbehälters befindet.

5. Anlage nach einem der vorhergehenden Ansprüche, wobei der Drucksensor (46; 48) dazu eingerichtet ist, den Druck in dem gemeinsamen Entlüftungsnetz (38) an der Mündung des einzelnen Entlüftungsnetzes (16d; 16h), das dem größten Druckverlust bezüglich des gemeinsamen Entlüftungsventilators (42) entspricht, zu messen.

6. Anlage nach einem der Ansprüche 1 bis 4, wobei der Drucksensor (146; 148; 246; 248) dazu eingerichtet ist, den Druck in einem einzelnen Entlüftungsnetz zu messen.

7. Anlage nach Anspruch 6, wobei der Drucksensor (146; 148; 246; 248) dazu eingerichtet ist, den Druck in dem einzelnen Entlüftungsnetz (116d; 116h; 216d; 216h) zu messen, dessen Mündung in das gemeinsame Entlüftungsnetz (138; 238) dem größten Druckverlust bezüglich des gemeinsamen Entlüftungsventilators (142; 242) entspricht.

8. Anlage nach Anspruch 6 oder 7, wobei das Entlüftungsnetz, dessen Druck durch den Drucksensor gemessen wird, mit einem Filter (126h, 226h) zum Verhindern der Verschmutzung des Verdampfers ausgestattet ist, wobei der Drucksensor (148, 248) dazu eingerichtet ist, den Druck stromaufwärts des Filters (126h, 226h) zu messen, wobei das Entlüftungsnetz, dessen Druck durch den Drucksensor gemessen wird, außerdem vorzugsweise mindestens eine Absaugmündung zum Absaugen der Luft aus der zugeordneten einzelnen Wohnung aufweist, wobei der Drucksensor dazu eingerichtet ist, den Druck stromabwärts der Absaugmündung zu messen.

9. Anlage nach einem der Ansprüche 6 bis 8, wobei der Sensor (246; 248) dazu eingerichtet ist, den Druck an einer Entlüftungsmündung (222h₃) des einzelnen Entlüftungsnetzes (216d; 216h) zu messen, wobei die Entlüftungsmündung (222h₃) , an welcher der Druck gemessen wird, vorzugsweise dem größten Druckverlust bezüglich des gemeinsamen Entlüftungsventilators (242) entspricht.

10. Anlage nach einem der vorhergehenden Ansprüche, wobei der Drucksensor ein binärer Sensor ist, insbesondere ein Druckschalter.

## Claims

1. Installation (10; 110; 210) for hot water production in a multi-dwelling building (12, 112, 212) comprising a plurality of individual dwellings (14a-14h; 114a-114h, 214a-214h), the installation comprising:
- an individual air extraction network (16a-16h, 116a-116h, 216a-216h) associated with each of the individual dwellings (14a-14h, 114a-114h, 214a-214h), each individual air extraction network being provided with means (18a-18h, 118a-118h, 218a-218h) for heat exchange between the extracted air and the water to be heated contained in a storage tank (20a-20h, 120a-120h , 220a-220h) arranged in the individual dwelling,
- an air extraction network (38; 138; 238) common to the different individual dwellings, into which the individual air extraction networks (16a-16h; 116a-116h; 216a-216h) discharge, downstream of the heat exchange means (18a-18h; 118a-118h; 218a-218h), the common air extraction network being provided with a common air extraction fan (42; 142; 242) and
- at least one pressure sensor (46, 48; 146, 148; 246, 248) adapted to measure the pressure in the extraction network (44; 144; 244) formed of individual air extraction networks (16a-16h; 116a-116h; 216a-216h) and the common extraction network (38; 138; 238), the fan (42; 142; 242) being controlled as a function of the pressure measured by the pressure sensor (46, 48; 146, 148; 246, 248).

2. Installation according to claim 1, wherein the heat exchange means (18a-18h; 118a-118h; 218a-218h) includes a refrigerant circuit between an evaporator, in which the air passing through the extraction conduit exchanges heat with the refrigerant, and a condenser in which the refrigerant exchanges heat with the fluid to be heated.

3. Installation according to claim 2, wherein the heat exchange means (18a-18h; 118a-118h; 218a-218h) further comprise a compressor downstream of the evaporator and upstream of the condenser and an expansion valve downstream of the condenser and upstream of the evaporator.

4. Installation according to claim 2 or 3, wherein the condenser is in the storage tank or is in contact with the outer wall of the storage tank.

5. Installation according to any preceding claim, wherein the pressure sensor (46; 48) is adapted to measure the pressure in the common air extraction network (38), at the outlet from the individual air extraction networks (16d; 16h) corresponding to the greatest loss in pressure head with respect to the common air extraction fan (42).

6. Installation according to any one of claims 1 to 4, wherein the pressure sensor (146; 148; 246; 248) is adapted to measure the pressure in an individual air extraction network.

7. Installation according to claim 6, wherein the pressure sensor (146; 148; 246; 248) is adapted to measure the pressure in the individual air extraction network (116d; 116h; 216d; 216h) discharge of which into the common air extraction network (138; 238) corresponds to the greatest loss of pressure head with respect to the common air extraction fan (142; 242).

8. Installation according to claim 6 or 7, wherein the air extraction network in which the air pressure is measured by the pressure sensor is provided with a filter (126h; 226h) to prevent fouling of the evaporator, the pressure sensor (148; 248) being adapted to measure the pressure upstream of the filter (126h; 226h), the air extraction network the pressure of which is measured by the pressure sensor also comprising, preferably at least a suction grille of the air from the individual associated dwellings, the pressure sensor being adapted to measure the pressure downstream of the suction grille.

9. Installation according to one of claims 6 to 8, wherein the sensor (246; 248) is adapted to measure the pressure at an extraction grille (222h₃) of the individual air extraction network (216d; 216h), the extraction grille (222h₃) at which the pressure is measured preferably corresponding to the greatest loss of pressure head with respect to the common air extraction fan (242).

10. Installation according to any preceding claim, wherein the pressure sensor is a binary sensor, in particular a pressure switch.
